# EUROPÄISCHE PATENTSCHRIFT

(11) **EP 3 732 945 B1**
(45) Veröffentlichungstag und Bekanntmachung des Hinweises auf die Patenterteilung: **26.04.2023**
(21) Anmeldenummer: 20160483.2
(22) Anmeldetag: 02.03.2020
(51) Int. Cl.: A01B 79/00, A01M 7/00, A01B 63/111

(54) **TECHNIK ZUR ERZEUGUNG EINES GELÄNDEPROFILS MIT EINER LANDMASCHINE**
TECHNIQUE FOR CREATING AN OFF-ROAD PROFILE WITH AN AGRICULTURAL MACHINE
TECHNIQUE DE LA GÉNÉRATION D'UN PROFIL DE TERRAIN À L'AIDE D'UNE MACHINE AGRICOLE

(30) Priorität: 03.04.2019 DE 102019108730
(43) Veröffentlichungstag der Anmeldung: 04.11.2020
(73) Patentinhaber: HORSCH LEEB Application Systems GmbH, 94405 Landau an der Isar (DE)
(72) Erfinder: Leeb, Theodor, 94405 Landau an der Isar (DE)
(74) Vertreter: v. Bezold & Partner Patentanwälte - PartG mbB

(56) Entgegenhaltungen:
- EP-B1- 2 186 405
- DE-A1-102012 201 333
- DE-A1-102017 122 421
- FR-A1- 3 019 969
- US-A- 5 809 440
- US-A1- 2011 153 168
- US-A1- 2014 074 360
- US-A1- 2016 029 547

## Beschreibung

Die Erfindung betrifft eine Technik zur Erzeugung eines Geländeprofils mit einer Landmaschine, vorzugsweise mit einer landwirtschaftlichen Zug- und/oder Arbeitsmaschine. Die Erfindung betrifft insbesondere eine Landmaschine, mittels derer ein Geländeprofil erzeugt werden kann, wobei die Landmaschine ein Arbeitsgerät aufweist, welches zueinander verschwenkbare Segmente aufweist, die in einer senkrecht zur Vorwärtsfahrtrichtung der Landmaschine angeordneten Ebene relativ zueinander verschwenkbar sind. Die Erfindung betrifft ferner ein Verfahren zur Erzeugung eines Geländeprofils mit einer solchen Landmaschine.

Im Bereich der Landwirtschaft werden zunehmend sog. Spurplanungssysteme eingesetzt. Mittels derartiger Spurplanungssystemen werden jeweils die Spuren und/oder Verfahrwege von landwirtschaftlichen Maschinen derartig geplant, dass mittels dieser optimale Fahrspuren und Fahrwege eingehalten werden, d. h. dass die Anzahl an Überfahrten auf ein Minimum begrenzt werden kann oder dass eine Arbeitsbreite einer landwirtschaftlichen Maschine insbesondere auch bei spitz zulaufenden Ackerflächen möglichst ganzflächig genutzt werden kann. Derartige Spurplanungssysteme sind aus der Praxis vor allem bei autonomen oder teilautonomen Maschinen bekannt bzw. verbreitet. Mittels des Spurplanungssystems werden hierbei jeweils Fahrspuren der Maschine definiert und anschließend mittels der Maschine während einer Feldarbeit exakt abgefahren. Zu diesem Zwecke kann das Spurplanungssystem und/oder die landwirtschaftliche Maschine mit einem Positionsbestimmungssystem (GPS, Glonass, Galileo oder dergl.) verbindbar sein. Ein System zur Erzeugung eines Geländeprofils wird zum Beispiel in US2014074360A offenbart.

Um die Spurplanung zu optimieren und insbesondere um die mittels der jeweiligen landwirtschaftlichen Maschine durchzuführenden Prozesse optimiert planen zu können, ist es zudem vorteilhaft, neben einer Außenkontur der Ackerfläche auch deren Geländeprofil, d. h. deren Höhenprofil mit zu berücksichtigen. Dadurch kann insbesondere bei autonomen Fahrzeugen auch deren Fahrgeschwindigkeit oder deren Verzögerung oder dergl.jeweils entsprechend mit geplant werden.

Eine Erstellung eines Flächenprofils war bislang nicht oder nur mit entsprechend aufwändiger Sensorik, z. B. mittels 3D-Kameras etc., möglich.

Es ist somit eine Aufgabe der Erfindung, eine verbesserte Technik zur Erzeugung eines Geländeprofils mit einer Landmaschine bereitzustellen, mit der Nachteile herkömmlicher Techniken vermieden werden können. Die Aufgabe der Erfindung ist es insbesondere, einen kosteneffizienten Ansatz bereitzustellen, um ein Geländeprofil mittels einer Landmaschine zu bestimmen.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten allgemeinen Gesichtspunkt der Erfindung wird eine Landmaschine bereitgestellt. Die Landmaschine kann eine landwirtschaftliche Zug- und/oder Arbeitsmaschine sein. Die Landmaschine wird nachfolgend auch als landwirtschaftliche Maschine bezeichnet. Die landwirtschaftliche Maschine umfasst ein Arbeitsgerät, welches zueinander verschwenkbare Segmente aufweist, die in einer senkrecht zur Vorwärtsfahrtrichtung der Landmaschine angeordneten Ebene relativ zueinander verschwenkbar sind. Anders ausgedrückt sind die Segmente jeweils um Achsen verschwenkbar, die zueinander parallel sind und im Wesentlichen in horizontaler Richtung bzw. in Vorwärtsfahrtrichtung verlaufen. Das Arbeitsgerät kann ein Gestänge, beispielsweise ein Spritzgestänge, sein, wobei die mehreren Segmente über horizontale, in Fahrtrichtung verlaufende Achsen schwenkbar angeordnet und untereinander mittels Gelenken verbunden sind. Die Gestänge ist hierbei vorzugsweise breiter als eine Spurbreite der Landmaschine und kann diese weiter vorzugsweise um ein Vielfaches überschreiten. Ferner können mit Ausnahme der äußeren Segmente die Segmente an ihren beiden Enden jeweils schwenkbeweglich mit einem benachbarten Segment verbunden sein, derart, dass die inneren Segmente jeweils mit zwei anderen benachbarten Segmenten schwenkbeweglich verbunden sind und die beiden äußeren Segmente nur mit einem benachbarten Segment schwenkbeweglich verbunden sind und ein freies Ende aufweisen. Es wird jedoch betont, dass die Verschwenkbarkeit der Segmente in der Ebene, die senkrecht zur Vorwärtsfahrtrichtung der Landmaschine ist, nicht ausschließt, dass die Segmente gemäß einer weiteren Variante zusätzlich auch in einer Ebene verschwenkbar ausgeführt sein können, die parallel zur Fahrtrichtung angeordnet ist, beispielsweise mittels zusätzlicher Schwenkgelenke.

Die Landmaschine umfasst eine Sensoreinrichtung, die ausgebildet ist, eine Relativposition der Segmente zueinander zu erfassen. Beispielsweise kann die Sensoreinrichtung ausgebildet sein, die Drehlagen und/oder Drehwinkel benachbarter Segmente zu erfassen.

Derartige landwirtschaftliche Maschinen sind an sich aus dem Stand der Technik bekannt, beispielsweise in Form von landwirtschaftlichen Verteilmaschinen, z. B. Feldspritzen, zum Ausbringen von flüssigen Wirkstoffen, vorzugsweise Pflanzenschutzmittel und/oder Düngemittel. Für derartige Verteilmaschinen sind Spritzgestänge als Arbeitsgerät bekannt, mit zueinander verschwenkbaren Segmenten, wie vorstehend beschrieben.

Die landwirtschaftliche Maschine umfasst ferner in an sich bekannter Weise eine Positionsbestimmungseinrichtung, vorzugsweise eine satellitengestützte Positionsbestimmungseinrichtung, die ausgebildet ist, Positionsdaten der Landmaschine und/oder des Arbeitsgeräts zu bestimmen.

Die landwirtschaftliche Maschine umfasst ferner eine Geländeprofilerzeugungseinrichtung, die ausgebildet ist, in Abhängigkeit von der erfassten Relativposition der Segmente und den bestimmten Positionsdaten ein Geländeprofil, vorzugsweise ein Höhenprofil, zu bestimmen. Die Geländeprofilerzeugungseinrichtung steht hierzu in Kommunikationsverbindung, entweder über Datenleitungen oder drahtlos, mit der Positionsbestimmungseinrichtung und der Sensoreinrichtung, um die Positionsdaten zu empfangen und um Sensordaten betreffend die Relativpositionen der Segmente zu empfangen.

Das Geländeprofil entspricht einem Höhenprofil oder umfasst ein Höhenprofil des überfahrenen Geländes. Das Gelände ist vorzugsweise eine Ackerfläche. Das Geländeprofil kann auch als Flächenprofil bezeichnet werden. Das Geländeprofil enthält Lage und Höhe von Geländepunkten des überfahrenen Geländes, vorzugsweise in einer vorbestimmten Rasterung oder Auflösung. Die Genauigkeit des bestimmten Geländeprofils hängt beispielsweise unter anderem von der Anzahl und Länge der Segmente ab.

Die vorliegende Erfindung beruht auf der Erkenntnis, dass die erfasste Relativposition der Segmente zueinander bzw. die hierfür vorgesehene Sensoreinrichtung des Arbeitsgeräts zusammen mit den Positionsdaten der Landmaschine bereits ausreichend sind, um hieraus ein Geländeprofil zu erstellen, so dass eine zusätzliche und kostenaufwändige Sensorik, z. B. in Form einer 3D-Kamera, zur Erzeugung des Geländeprofils nicht vonnöten ist.

Die Landmaschine und/oder das Arbeitsgerät sind hierbei vorzugsweise derart ausgebildet, dass sich die Relativposition der Segmente zueinander beim Überfahren des Feldes in Abhängigkeit von dem Geländeprofil einstellt, vorzugsweise derart, dass sich die Segmente korrespondierend zum Geländeprofil zueinander verschwenken. Dies bedeutet, dass der Abstand der Segmente, z. B. ein mittlerer Abstand der Segmente, zur Geländeoberfläche im Wesentlichen gleich ist oder sich zumindest angleicht. Mit anderen Worten sind Landmaschine und/oder das Arbeitsgerät vorzugsweise derart ausgebildet, dass in Abhängigkeit vom Geländeprofil jeweils eine Anpassung der Verschwenkstellung und damit der Lage der Segmente des Arbeitsgeräts erfolgt, derart, dass die Segmente im Rahmen der möglichen Gestängekinematik alle möglichst den gleichen Abstand zur einer Geländeoberfläche aufweisen. Anders ausgedrückt, passt sich die Relativposition der Segmente beim Überfahren eines Geländeabschnitts an die Oberflächenkontur bzw. das Höhenprofil des Geländeabschnitts näherungsweise an, soweit dies entsprechend der Anzahl und Länge der Segmente möglich ist.

Dies kann durch eine aktive Regelung der Segmentlage erfolgen, wie es beispielsweise bei einem Spritzgestänge der Fall sein kann und beispielhaft in der Patentschrift EP 2 186 405 B1 beschrieben ist. Dies kann auch ohne Regelung quasi automatisch erfolgen, z. B. bei einem Arbeitsgerät, das als Bodenbearbeitungsgerät ausgeführt ist, mit bodengeführten Segmenten, wobei das Geländeprofil direkt über den Bodenkontakt eine Verschwenkung der Segmente relativ zueinander bewirkt.

Ein besonderer Vorzug liegt somit darin, dass die unterschiedlichen Stellungen der Segmente zueinander, die sich beim Überfahren eines Geländes einstellen, bereits implizit Informationen des Geländeprofils enthalten. Durch Verknüpfen dieser Relativpositionen der Segmente mit den erfassten Positionsdaten, d. h. mit Daten oder Ortangaben, die angeben, wo auf dem Gelände, z. B. wo auf der Ackerfläche, welches Segment welche Verschwenkstellung hatte, kann hieraus vorteilhafterweise auf das Geländeprofil rückgeschlossen werden. Vereinfacht kann auch gesagt werden, dass zu jeder Position der landwirtschaftlichen Maschine auf einer Ackerfläche in Abhängigkeit von den Relativpositionen der Segmente des Arbeitsgeräts, z. B. einem Verteilgestänge, ein Geländeprofil erzeugt wird.

Gemäß einem vorteilhaften Aspekt der Erfindung kann die Geländeprofilerzeugungseinrichtung ausgebildet sein, zur Erzeugung des Geländeprofils für mindestens zwei der Segmente, vorzugsweise für alle Segmente, jeweils eine aktuelle Segmentposition anhand der bestimmten Positionsdaten und anhand der erfassten Relativposition der Segmente zu bestimmen.

Unter Berücksichtigung des relativen Abstands der Positionsbestimmungseinrichtung zu einem festen Aufhängepunkt eines der Segmente an der Landmaschine und der Abmessungen der einzelnen Segmente kann die räumliche Position jedes Punkts der Segmente anhand der bestimmten Positionsdaten und anhand der erfassten Relativposition der Segmente eindeutig bestimmt werden. Die aktuelle Segmentposition kann hierbei eine Lage und Höhe des Segments umfassen. Unter der Lage kann die horizontale Lage auf dem Gelände verstanden werden. Gemäß diesem Aspekt ist die Geländeprofilerzeugungseinrichtung ferner ausgebildet, anhand der aktuellen Segmentposition einen korrespondierenden Punkt des Geländeprofils zu bestimmen.

Beispielsweise kann bei einem Arbeitsgerät, wie einem Spritzgestänge, dessen Aufhängungshöhe über dem Boden bekannt ist, anhand dieser Aufhängungshöhe und der bestimmten Lage und Höhe des Segments der korrespondierende Punkt des Geländeprofils bestimmt werden, der um die Aufhängungshöhe versetzt in vertikaler Richtung unterhalb der aktuellen Segmentposition liegt. Bei einem bodengeführten Arbeitsgerät kann die aktuelle Segmentposition direkt als Wert des korrespondierenden Punkts des Geländeprofils festgelegt werden.

Gemäß einer weiteren vorteilhaften Variante dieses Aspekts kann das Bestimmen der aktuellen Segmentposition das Bestimmen einer Lage und Höhe von mehreren Punkten entlang des Segments umfassen, beispielsweise auch von allen Punkten über die Segmentlänge. Hierbei kann die Geländeprofilerzeugungseinrichtung ausgebildet sein, basierend auf den bestimmten Lagen und Höhen der mehreren Punkte korrespondierende Punkte des Geländeprofils zu bestimmen. Je höher die Anzahl der Segmente ist, je kürzer die Segmente sind und je besser sich die Segmentpositionen an das aktuelle Geländeprofil anpassen, desto genauer kann mit dem erfindungsgemäßen Ansatz das Geländeprofil bestimmt werden.

Gemäß einem weiteren Aspekt der Erfindung kann die Geländeprofilerzeugungseinrichtung ausgebildet sein, das Geländeprofil für einen von der Landmaschine und/oder dem Arbeitsgerät überfahrenen Geländeabschnitt, beispielsweise eine Ackerfläche, zu erzeugen, indem die Relativposition der Segmente und die Positionsdaten für die unterschiedlichen Positionen der Landmaschine und/oder dem Arbeitsgerät beim Überfahren gemäß einer Rasterung und/oder Auflösung ermittelt werden und hieraus das Geländeprofil in korrespondierender Rasterung und/oder Auflösung bestimmt wird. Die Rasterung und/oder Auflösung kann beispielsweise so gewählt sein, dass immer, nachdem eine vorab festgelegte Fahrtstrecke zurückgelegt wurde, z. B. alle 50 cm oder nach jedem Meter, das Geländeprofil über die Breite der sich quer zur Fahrtrichtung erstreckenden Segmente, was in der Regel der sog. Arbeitsbreite der Landmaschine oder des Arbeitsgeräts entspricht, bestimmt wird.

Gemäß einer Weiterbildung dieses Aspekts kann die Geländeprofilerzeugungseinrichtung ausgebildet sein, bei wiederholtem Überfahren des gleichen Geländeabschnitts ein Geländeprofil dieses Geländeabschnitts zu erzeugen, in welches ein bei einer vorherigen Überfahrt bestimmtes Geländeprofil eingeht. Ein bestimmtes Geländeprofil kann auf diese Weise durch mehrere Überfahrten entsprechend verbessert werden, beispielsweise durch Mittelwertbildung der bei den einzelnen Fahrten ermittelten Geländeprofile oder durch Erhöhung der Auflösung und Genauigkeit, indem neue Geländeprofilpunkte, die erst bei wiederholtem Überfahren des gleichen Geländeabschnitts ermittelt werden, ergänzt werden.

Ferner besteht die Möglichkeit, dass die Geländeprofilerzeugungseinrichtung ausgebildet ist, bei einer Überfahrt eines Geländes entlang verschiedener, vorzugsweise seitlich versetzter, Fahrspuren Geländeprofile für die den Fahrspuren zugeordneten Geländeabschnitte zu bestimmen und aus diesen Geländeprofilen ein Gesamtgeländeprofil zu bestimmen. Auf diese Weise können die sich somit ergebenden verschiedenen Relativpositionen der Segmente des Gestänges wiederum entsprechend zu einem Gesamtgeländeprofil verrechnet und/oder zusammengesetzt werden.

Die Sensoreinrichtung kann eine Mehrzahl von Sensoren umfassen, mittels welcher jeweils die Relativpositionen der Segmente zueinander erfasst werden können. Die Mehrzahl von Sensoren können vorzugsweise als zwischen den Segmenten angeordnete Sensoren ausgeführt sein, die jeweils ausgebildet sind, die absolute Drehlage der einzelnen Segmente oder die relative Verschwenkstellung der Segmente zueinander in der senkrecht zur Vorwärtsfahrtrichtung der Landmaschine angeordneten Ebene zu erfassen. Die Sensoren können beispielsweise als Winkelsensoren oder Potentiometer ausgeführt sein. Die Sensoren können auch als Drehratensensoren ausgebildet sein, deren Ausgangssignal zeitlich integriert wird, um eine Drehlage zu bestimmen.

Gemäß einem weiteren Aspekt kann die Landmaschine eine Abstands-Sensoreinrichtung umfassen, die ausgebildet ist, einen Höhenabstand eines oder mehrerer Segmente zur Geländeoberfläche und/oder zu einem Pflanzenbestand des Geländes zu bestimmen. Hierbei ist die Geländeprofilerzeugungseinrichtung ausgebildet, das Geländeprofil in Abhängigkeit von einer durch die Abstands-Sensoreinrichtung ermittelten Höhenführung der Segmente, d. h. einem Abstand der Segmente vom Boden oder Bestand, zu bestimmen. Die Abstands-Sensoreinrichtung kann hierzu mehrere Ultraschallsensoren umfassen, die jeweils an einem Segment angeordnet sind. Die über die Abstands-Sensoreinrichtung ermittelten Höhenabstände können zusätzlich oder zur Korrektur der mittels der Sensoreinrichtung ermittelten Relativposition der Segmente erfasst werden.

Gemäß einer weiteren Ausführungsform kann die Geländeprofilerzeugungseinrichtung ausgebildet sein, Hindernisse im Gelände, beispielsweise Bäume, Sträucher und/oder Strommasten, zu erkennen, um Positionsdaten des erkannten Hindernisse zu bestimmen und vorzugsweise zusammen mit dem Geländeprofil zu speichern. Auf diese Weise können derartige Hindernisse bei zukünftigen Fahrten umfahren werden, was besonders für die optimierte Spurplanung von Vorteil ist. Auch ist es möglich, dass auf diese Weise einzelne Segmente frühzeitig aus dem Gefahrenbereich weggeschwenkt werden können, um Kollisionen oder dergl. effektiv zu vermeiden. Auch ist es möglich, dass auf diese Weise die Verteilung des jeweiligen Verteilguts entsprechend gesteuert wird.

Gemäß einer Variante dieser Ausführungsform kann ein Hindernis anhand zumindest eines der folgenden Ereignisse erkannt werden:
- eines für ein Hindernisse charakteristischen Ausweichfahrmanövers der Landmaschine, z. B. einer kreisähnlichen Umfahrbewegung;
- einer um eine in oder entgegengesetzt zur Vorwärtsfahrtrichtung erfolgenden Schwenkbewegung eines oder mehrerer Segmente um eine aufrechte Achse, falls die Segmente eine derartige Schwenkachse aufweisen,
- einer um eine nach oben oder unten zur Bodenoberfläche erfolgenden Schwenkbewegung eines oder mehrere Segmente, um eine in Vorwärtsrichtung orientierte Achse,
- einer sensorischen Hinderniserfassung, z. B. mittels einer Kamera, eines Ultraschallsensors oder dergleichen; und
- einer manuellen Hinderniserfassung durch eine Benutzereingabe, bei der der Fahrer beispielsweise manuell ein Hindernis auf einer Karte eingeben oder markieren kann.

Die landwirtschaftliche Maschine kann ein Trägerfahrzeug umfassen, an welchem das Arbeitsgerät angeordnet ist. Die Positionsbestimmungseinrichtung kann beispielsweise auf dem Trägerfahrzeug angeordnet sein. Die Lage der Segmente in Bezug auf die Positionsbestimmungseinrichtung ergibt sich dann aus einem bekanntem Offset, z. B. Abstand eines Aufhängepunkts der Segmentanordnung, z. B. der Gestängeaufhängung, am Trägerfahrzeug von der Positionsbestimmungseinrichtung sowie den erfassten Relativposition der Segmente und den bestimmten Positionsdaten.

Gemäß einem weiteren Aspekt kann zwischen Trägerfahrzeug und dem Aufhängepunkt der Segmentanordnung am Trägerfahrzeug ein Sensor angeordnet sein, der zur Erfassung einer relativen Drehlage von Trägerfahrzeug und Arbeitsgerät und/oder von Trägerfahrzeug und einem Mittelteil der Segmente oder der Segmentanordnung ausgebildet ist. Gemäß diesem Aspekt ist die Geländeprofilerzeugungseinrichtung ausgebildet, in Abhängigkeit von der erfassten relativen Drehlage das Geländeprofil zu bestimmen, beispielsweise indem eine Relativposition der Segmente in Abhängigkeit von der erfassten relativen Drehlage korrigiert wird oder in dem zusätzlich zu der erfassten Relativposition der Segmente ferner die erfasste relative Drehlage gespeichert und dokumentiert wird.

Dies ist besonders vorteilhaft, um eine Bezugsebenen anhand der Ausrichtung zum Trägerfahrzeug festzulegen, falls kein Abstandssensor zum Boden an einem oder mehreren der Segmente vorgesehen ist. Angenommen es wurde in einem vorherigen Schritt eine bestimmte Relativposition der Segmente zueinander, beispielsweise von 12°, ermittelt. Soll nun zu einem späteren Zeitpunkt, beispielsweise bei einer späteren Überfahrt des gleichen Geländes die vorherige Ausrichtung der Segmente zueinander von der Landmaschine nachgestellt werden, kann einerseits wieder die zuvor erfasste Relativposition der Segmente zueinander nachgestellt werden, beispielsweise auf 12°. Ferner kann die richtige Bezugsebene eingestellt werden, in dem die zusätzlich erfasste relative Drehlage zwischen Trägerfahrzeug und Gestänge ebenfalls eingestellt wird. Beispielsweise kann vorgegeben sein, dass an Position 1 im Feld der Winkel zwischen Trägerfahrzeug und Gestänge 0° sein muss und die Segmente 12° zueinander verschwenkt sein müssen.

Die Bezugsebene kann hierbei wiederum identisch zu einer einer langfristigen Ausrichtung des Trägerfahrzeugs entsprechenden, ein gemitteltes Bodenprofil wiederspiegelnden Referenzebene sein.

Gemäß einem weiteren Aspekt kann an dem Trägerfahrzeug der Landmaschine ein Neigungssensor zur Erfassung einer Neigung des Trägerfahrzeugs angeordnet sein. Gemäß diesem Aspekt kann die Geländeprofilerzeugungseinrichtung ausgebildet sein, in Abhängigkeit von der erfassten Neigung des Trägerfahrzeugs das Geländeprofil zu bestimmen. Aus der Neigung des Trägerfahrzeugs und der Neigung der Segmente kann wiederum auf die relative Drehlage von Trägerfahrzeug und Arbeitsgerät und/oder von Trägerfahrzeug und einem Mittelteil der Segmente oder der Segmentanordnung geschlossen werden, so dass wieder eine verbesserte Bestimmung der Referenzebene ermöglicht wird, wie vorstehend dargelegt wurde.

Gemäß einer weiteren Ausführungsform kann die Geländeprofilerzeugungseinrichtung ausgebildet sein, Werte für mindestens einen Fahrbetriebsparameter der Landmaschine beim Überfahren des Geländes zusammen mit den Positionsdaten, an welchen die jeweiligen Werte auftraten, oder mit dem Geländeprofil zu speichern. In Abhängigkeit derartiger Fahrbetriebsparameterinformationen kann das jeweilige Geländeprofil noch weiter präzisiert werden und/oder ein autonomer Fahrbetriebsmodus noch besser geplant werden.

Hierbei können die Werte für den mindestens einen Fahrbetriebsparameter eine Fahrgeschwindigkeit, eine Fahrbeschleunigung und/oder eine Leistungsangabe einer Antriebseinheit der Landmaschine angeben. Alternativ oder zusätzlich können die Werte für den mindestens einen Fahrbetriebsparameter angeben, ob die Landmaschine an einer Fahrposition beschleunigt, verzögert oder mit konstanter Fahrgeschwindigkeit bewegt wird.

Gemäß einer besonders bevorzugten Ausführungsform der Erfindung ist die landwirtschaftliche Maschine eine landwirtschaftliche Verteilmaschine zum Ausbringen eines Verteilguts, insbesondere von flüssigen und/oder festen Wirkstoffen. Die landwirtschaftliche Maschine kann eine Feldspritze, auch als Pflanzenschutzspritze bezeichnet, und/oder ein Düngerstreuer sein. Mit der Feldspritze oder dem Düngersteurer können jeweils verschiedenste Verteilgüter wie Düngemittel, Pflanzenschutzmittel, Saatgut oder dergl. über eine Bodenfläche oder über einen Pflanzenbestand ausgebracht werden. Das jeweilige Verteilgut kann in flüssiger und/oder fester (z. B. granularer) Form vorliegen. Auch kann das Verteilgut ein in einer Flüssigkeit gelöstes Granulat sein.

Das Arbeitsgerät gemäß dieser Ausführungsform kann ein Verteilgestänge, z. B. ein Spritzgestänge, sein oder umfassen, wobei die mehreren Segmente über horizontale, in Fahrtrichtung verlaufende Achsen schwenkbar angeordnete und untereinander mittels Gelenken verbundene Teile des Verteilgestänges gebildet sind.

Die landwirtschaftliche Verteilmaschine kann als eine selbstfahrende oder als eine mittels eines Zugfahrzeugs ziehbare bzw. gezogene oder als eine an einem Zugfahrzeug anbaubare bzw. angebaute Verteilmaschine ausgebildet sein. Die selbstfahrende Verteilmaschine oder das Zugfahrzeug kann zudem als in einem autonomen Fahrmodus betreibbares Fahrzeug (z. B. vollautonom oder teilautonom) ausgeführt sein.

Die landwirtschaftliche Verteilmaschine kann ein Trägerfahrzeug und ein am Trägerfahrzeug mittelbar oder unmittelbar angeordnetes Verteilgestänge aufweisen, das zumindest um eine in Fahrtrichtung verlaufende Schwenkachse bewegbar angeordnet ist. Anders ausgedrückt ist das Verteilgestänge in der senkrecht zur Vorwärtsfahrtrichtung der Landmaschine angeordneten Ebene verschwenkbar.

Die landwirtschaftliche Verteilmaschine kann ferner eine Stelleinrichtung umfassen, mittels derer das Verteilgestänge mit einem Aufbau- oder Rahmenabschnitt und/oder mit einem starr oder beweglich gelagerten Stützabschnitt des Trägerfahrzeugs gekoppelt ist, derart, dass mittels der Stelleinrichtung eine Stellkraft erzeugbar ist, um das Verteilgestänge um die Schwenkachse zu bewegen.

Das Verteilgestänge, z. B. das Spritzgestänge, kann mindestens zwei über Gelenke an einem Mittelteil angeordnete Ausleger und an den Auslegern angeordnete Spritzdüsen zum Ausbringen von Flüssigkeiten aufweisen. Das Mittelteil und die zwei Ausleger können die zueinander verschwenkbaren Segmente ausbilden, deren Relativposition von der Sensoreinrichtung erfasst wird und zur Bestimmung des Geländeprofils verwendet wird.

Gemäß einer weiteren Variante dieser bevorzugten Ausführungsform kann jeder Ausleger in mindestens zwei Auslegersegmente unterteilt sein, die über eine horizontale Achse schwenkbar angeordnet sind, wobei die Auslegersegmente untereinander mittels Gelenken verbunden sind und eine Stellbewegung der einzelnen Auslegersegmente zueinander aktiv steuerbar ist.

Das Mittelteil und die beidseitig hiervon angeordneten mindestens zwei Auslegersegmente bilden gemäß dieser Variante die zueinander verschwenkbaren Segmente, deren Relativposition von der Sensoreinrichtung erfasst wird und zur Bestimmung des Geländeprofils verwendet wird.

Um ein möglichst exaktes Flächenprofil zu erzeugen, kann das Arbeitsgerät, beispielsweise Verteilgestänge, allgemein eine Mehrzahl an zueinander verschwenkbaren Segmenten aufweisen, beispielsweise drei, fünf, sieben oder neun Segmente, welche wiederum in Abhängigkeit von einer Arbeitsbreite verschiedene Breiten von einem, zwei oder mehr Meter aufweisen können.

Die vorliegende Erfindung umfasst somit generell eine landwirtschaftliche Maschine, welche zueinander schwenkbare Segmente umfasst. Neben der beispielhaft hervorgehobenen Ausführungsform des Arbeitsgeräts als Verteilgestänge, insbesondere als Spritzgestänge, kann das Arbeitsgerät auch ein bodengeführtes Arbeitsgerät und/oder ein Bodenbearbeitungsgerät sein. Die landwirtschaftliche Maschine kann beispielsweise auch als Bodenbearbeitungs- und/oder Saatmaschine ausgeführt sein.

Die Positionsbestimmungseinrichtung kann in an sich bekannter Weise einen satellitengestützten Positionsdatenempfänger umfassen, beispielsweise einen GPS- (Global Positioning System-), Glonass- oder Galileo-Empfänger. Ferner kann die Positionsbestimmungseinrichtung ausgebildet sein, Positionsdaten mittels eines Navigationssystems der Landmaschine zu bestimmen. Die Positionsdaten können aktuelle geographische Koordinaten der Landmaschine umfassen.

Die Geländeprofilerzeugungseinrichtung kann eine programmtechnisch eingerichtete Recheneinheit sein, die als separate Einheit oder als Teil eines zentralen Steuergeräts ausgebildet ist.

Gemäß einem zweiten allgemeinen Gesichtspunkt der Erfindung wird ein Verfahren zur Erzeugung eines Geländeprofils mit einer Landmaschine, wie in diesem Dokument beschrieben, bereitgestellt.

Zur Vermeidung von Wiederholungen sollen rein vorrichtungsgemäß offenbarte Merkmale auch als verfahrensgemäß offenbart gelten und beanspruchbar sein. Die vorgenannten Aspekte und erfindungsgemäßen Merkmale, insbesondere im Hinblick auf die Ausbildung der Landmaschine und der Geländeprofilerzeugungseinrichtung und die Bestimmung des Geländeprofils, gelten somit auch für das Verfahren. Das Verfahren kann die folgenden Schritte umfassen: Erzeugen eines Geländeprofils in Abhängigkeit von der erfassten Relativposition der Segmente und den bestimmten Positionsdaten.

Gemäß einem weiteren Aspekt des Verfahrens kann das Gelände mittels mindestens zweier verschiedener Landmaschinen abgefahren werden, die unterschiedliche Arbeitsbreiten aufweisen, derart, dass ein erstes Geländeprofil mit einer ersten Landmaschine und mindestens ein zweites Geländeprofil mit mindestens einer zweiten Landmaschine erzeugt wird und die erzeugten Geländeprofile fusioniert werden. Unter der Fusionierung der erzeugten Geländeprofile wird das Erstellen eines Geländeprofils unter Verknüpfung, z. B. Verrechnung, des ersten und zweiten Geländeprofils verstanden, um beispielsweise ein Geländeprofil höherer Genauigkeit zu erzeugen.

Gemäß einem weiteren Aspekt des Verfahrens kann das Gelände zur Erzeugung des Geländeprofils mittels der Landmaschine in verschiedenen Richtungen abgefahren werden, vorzugsweise einmal in einer Längsrichtung und einmal in einer Querrichtung des Geländes. Hierbei können bei jeder Überfahrt jeweils ein Geländeprofil erzeugt werden, die anschließend wieder vorzugsweise fusioniert werden, um beispielsweise ein Geländeprofil höherer Genauigkeit zu erzeugen.

Die zuvor beschriebenen Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1A:: eine Rückansicht einer landwirtschaftlichen Maschine gemäß einer Ausführungsform der Erfindung;
- Figur 1B:: eine perspektivische Ansicht der landwirtschaftlichen Maschine aus Figur 1A;
- Figur 2:: eine Draufsicht der landwirtschaftlichen Maschine aus Figur 1A;
- Figur 3:: eine Seitenansicht der landwirtschaftlichen Maschine aus Figur 1A;
- Figur 4:: eine Seitenansicht einer landwirtschaftlichen Maschine gemäß einer weiteren Ausführungsform der Erfindung;
- Figur 5:: eine landwirtschaftliche Maschine gemäß einer Ausführungsform beim Überfahren unterschiedlicher Geländequerschnitte;
- Figur 6: ein Blockdiagramm zur Illustration der Bestimmung des Geländeprofils gemäß einer Ausführungsform der Erfindung;
- Figur 7: eine schematische Illustration der Bestimmung des Geländeprofils gemäß einer Ausführungsform der Erfindung, und
- Figur 8: eine schematische Illustration der Bestimmung des Geländeprofils gemäß einer weiteren Ausführungsform der Erfindung.

Gleiche oder funktional äquivalente Elemente sind dabei in allen Figuren mit denselben Bezugszeichen bezeichnet und zum Teil nicht gesondert beschrieben.

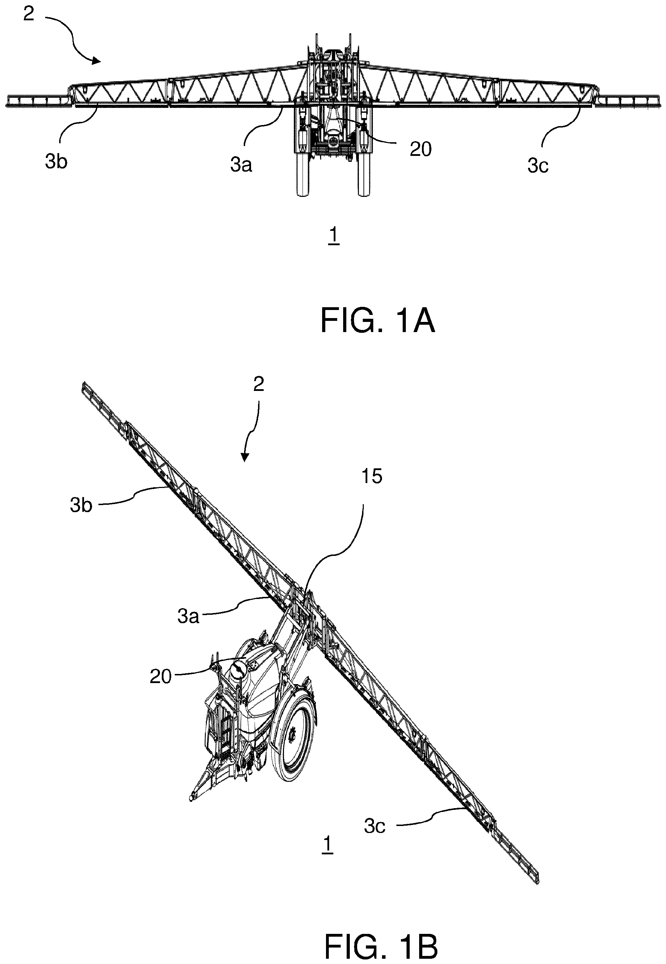

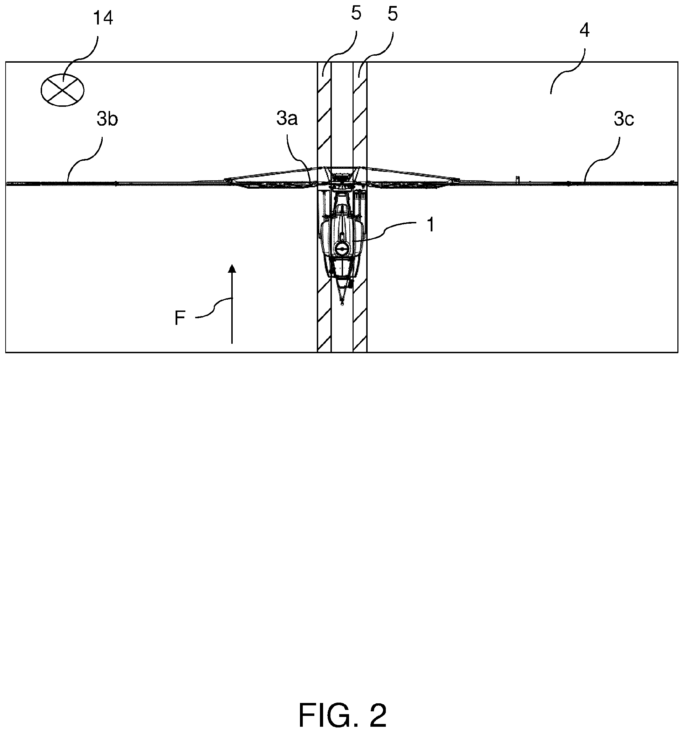

Die Figuren 1A bzw. 1B zeigen eine Rückansicht bzw. eine perspektivische Ansicht einer landwirtschaftlichen Maschine gemäß einer Ausführungsform der Erfindung. Die landwirtschaftliche Maschine 1 ist vorliegend als gezogene landwirtschaftliche Verteilmaschine, insbesondere als Feldspritze, ausgebildet. Die landwirtschaftliche Verteilmaschine 1 weist ein Trägerfahrzeug 20 und ein am Trägerfahrzeug 20 angeordnetes Verteilgestänge 2 auf, das zumindest um eine in Fahrtrichtung F (vgl. Figur 2) verlaufende Schwenkachse bewegbar angeordnet ist. Anders ausgedrückt ist das Verteilgestänge in der senkrecht zur Vorwärtsfahrtrichtung der Landmaschine angeordneten Ebene verschwenkbar.

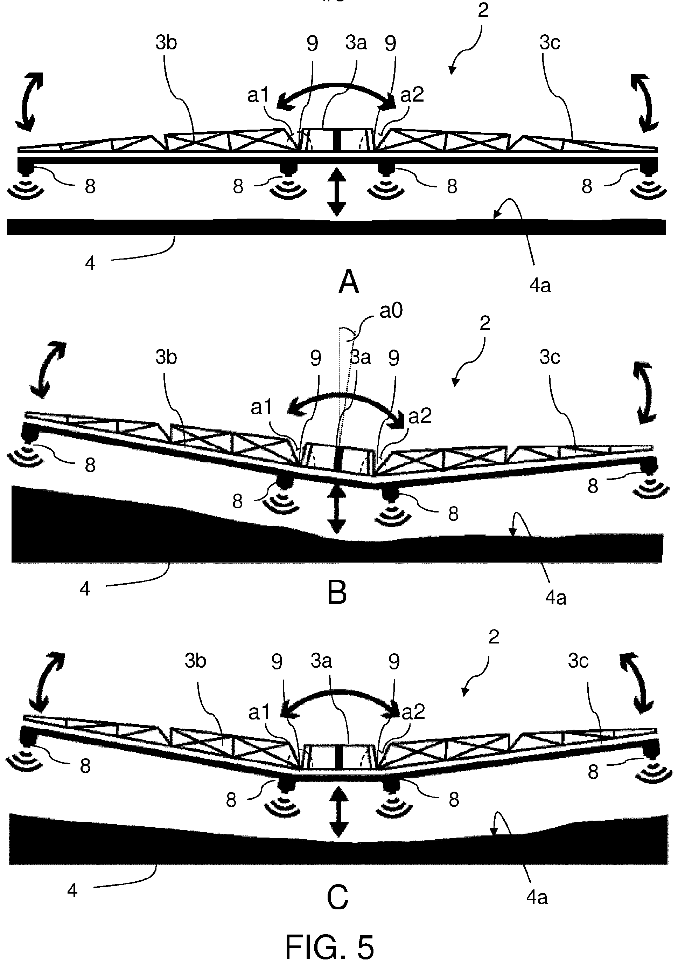

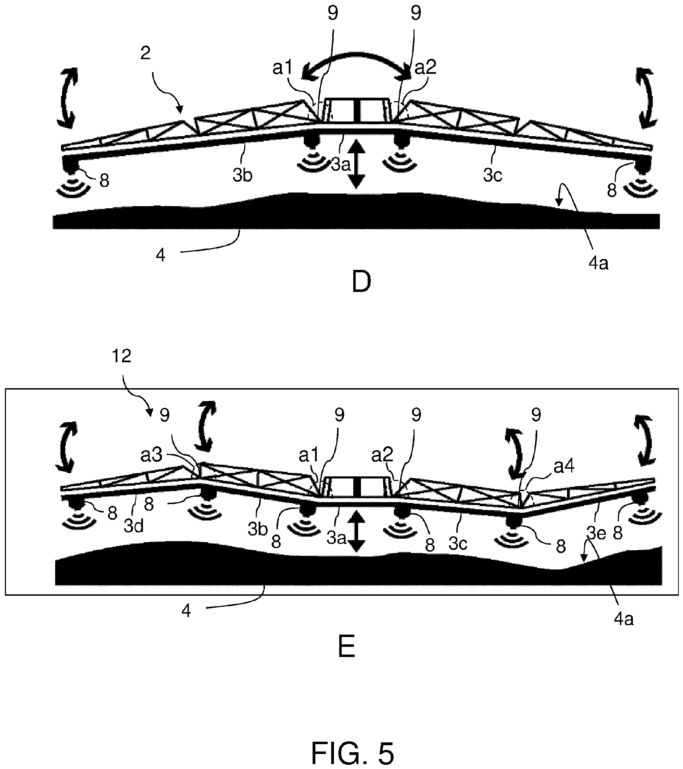

Das Verteilgestänge 2 umfasst mehrere Segmente 3a, 3b, 3c, die über horizontale, in Fahrtrichtung verlaufende Achsen schwenkbar angeordnet und untereinander mittels Gelenken verbunden sind. Hierbei weist das Verteilgestänge 2 mindestens zwei über Gelenke an einem Mittelteil 3a angeordnete Ausleger 3b, 3c und an den Auslegern 3b, 3c angeordnete Spritzdüsen zum Ausbringen von Flüssigkeiten, z. B. einem Pflanzenschutzmittel, auf. Die Gelenke sind derart ausgebildet, dass sie einen Schwenkvorgang der einzelnen Segmente über eine horizontale Achse und/oder eine in Fahrtrichtung und durch das jeweilige Gelenk, um das geschwenkt werden soll, verlaufende Achse ermöglichen. Das Mittelteil 3a und die Ausleger 3b und 3c sind somit in einer senkrecht zur Vorwärtsfahrtrichtung F der Landmaschine 1 angeordneten Ebene relativ zueinander verschwenkbar, was nachfolgend noch anhand der Ansichten der Figur 5 illustriert ist.

Figur 2 zeigt eine Draufsicht der landwirtschaftlichen Verteilmaschine 1 beim Überfahren eines Geländeabschnitts 4, z. B. einer Ackerfläche. Hierbei fährt die landwirtschaftliche Verteilmaschine 1 entlang einer Fahrgasse bzw. Fahrspur 5, die in der Regel bereits während der Aussaat angelegt wird, um beim Befahren des jeweiligen Pflanzenbestands diesen bzw. die jeweiligen Nutzpflanzen nicht zu beschädigen. Auf dem Geländeabschnitt 4 können sich auch Hindernisse 14, z. B. ein Baum oder Strommast, befinden.

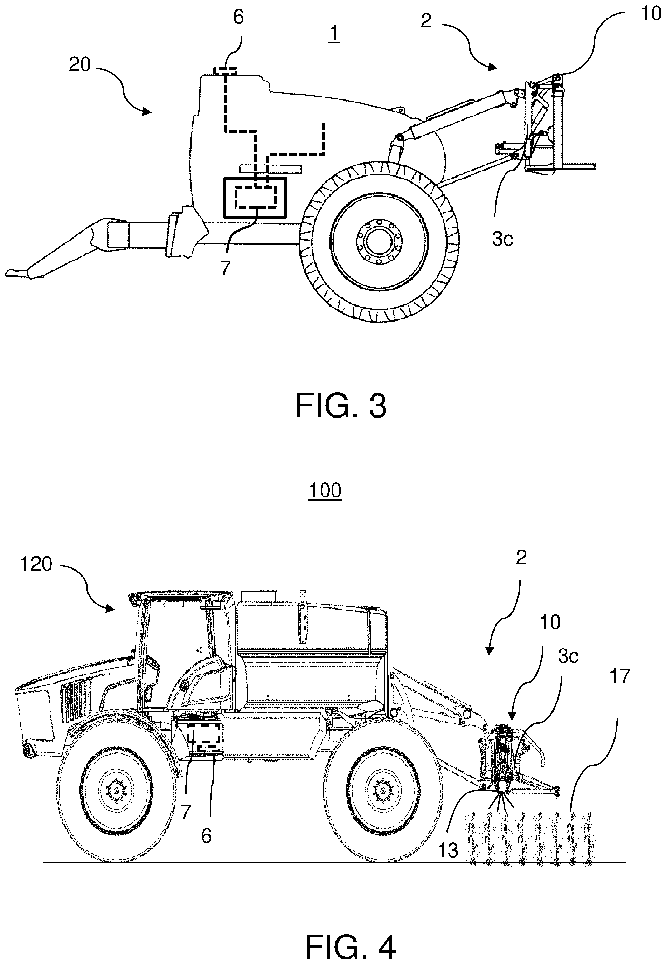

Figur 3 zeigt eine Seitenansicht der landwirtschaftlichen Verteilmaschine 1. Die landwirtschaftliche Verteilmaschine 1 umfasst eine Sensoreinrichtung 10, die ausgebildet ist, eine Relativposition der Segmente 3a, 3b, 3c zueinander zu erfassen. Anders ausgedrückt erfasst die Sensoreinrichtung jeweils die Verschwenkstellung (Verschwenk- bzw. Drehwinkel) der Ausleger 3b, 3c zum Mittelteil in der senkrecht zur Vorwärtsfahrtrichtung der landwirtschaftlichen Maschine angeordneten Ebene.

Die landwirtschaftliche Verteilmaschine 1 umfasst ferner eine satellitengestützte Positionsbestimmungseinrichtung 6, die ausgebildet ist, Positionsdaten der Landmaschine 1 und/oder des Arbeitsgeräts 2 zu bestimmen, so dass an jeder Stelle beim Überfahren des Geländeabschnitts 4 die Ortsposition der landwirtschaftlichen Verteilmaschine 1 bekannt ist.

Die Positionsbestimmungseinrichtung 6 kann beispielsweise auf dem Trägerfahrzeug 20 angeordnet sein. Aufgrund des bekannten Abstands des Aufhängepunkts des Mittelteils 3a des Verteilgestänges 2 von der Positionsbestimmungseinrichtung ist somit auch die Position dieses Aufhängepunkts des Mittelteils 3a des Verteilgestänges 2 beim Überfahren des Geländeabschnitts 4 bekannt. Zusammen mit der Relativposition der Segmente 3a, 3b, 3c zueinander ist hieraus die Lage und Höhe der Segmente berechenbar.

Die landwirtschaftliche Verteilmaschine 1 umfasst ferner eine Geländeprofilerzeugungseinrichtung 7, die ausgebildet ist, in Abhängigkeit von der erfassten Relativposition a1, a2 der Segmente 3a, 3b, 3c und den bestimmten Positionsdaten ein Geländeprofil zu bestimmen, was nachfolgend noch detaillierter erläutert wird.

Figur 4 zeigt eine Seitenansicht einer landwirtschaftlichen Maschine gemäß einer weiteren Ausführungsform der Erfindung. Im Unterschied zu der Verteilmaschine der Figuren 1 bis 3 ist die landwirtschaftliche Verteilmaschine 100 als selbstfahrende Feldspritze ausgeführt, an deren Trägerfahrzeug 120 wiederum ein Verteilgestänge 2 mit Mittelteil 3a und seitlichen Auslegern 3b, 3c angeordnet ist. In der Darstellung der Figur 4 ist auch eine Spritzdüse 13 zum Ausbringen eines flüssigen oder festen Wirkstoffes auf einen Pflanzenbestand 17 erkennbar. Die landwirtschaftliche Verteilmaschine 100 ist ebenfalls in analoger Weise wie die landwirtschaftliche Maschine 1 mit der Sensoreinrichtung 10, der Positionsbestimmungseinrichtung 6 und der Geländeprofilerzeugungseinrichtung 7 ausgestattet. Typischerweise befindet sich der Empfänger der Positionsbestimmungseinrichtung, z. B. ein GPS-Empfänger, bei selbstfahrenden Maschinen auf dem Dach der Kabine.

Die Regelung des Verteilgestänges 2 bei Überfahrt eines Geländes mit veränderlichem Höhenprofil ist in den Ansichten der Figur 5 illustriert. Figur 5 illustriert in den Ansichten A bis D eine Querschnittsansicht der landwirtschaftlichen Verteilmaschine 1 an verschiedenen Stellen beim Überfahren eines Geländes 4 mit wechselndem Höhenprofil. Zur Vereinfachung der Darstellung und zur Verbesserung der Übersichtlichkeit ist nur das Verteilgestänge 2, nicht aber das Trägerfahrzeug 2 dargestellt.

Die landwirtschaftliche Verteilmaschine 1 verfügt ferner über eine an sich bekannte Stelleinrichtung, z. B. in Form von pneumatisch oder hydraulisch betriebenen Stellzylindern. Mittels der Stelleinrichtung ist das Verteilgestänge 2 mit einem Aufbau- oder Rahmenabschnitt und/oder mit einem starr oder beweglich gelagerten Stützabschnitt des Trägerfahrzeugs 2 gekoppelt, derart, dass mittels der Stelleinrichtung eine Stellkraft erzeugbar ist, um das Verteilgestänge 1 um die Schwenkachse zu bewegen. Der Mittelteil 3a kann optional beweglich an der Stelleinrichtung angeordnet sein. Eine mögliche an sich bekannte Ausführungsform sieht vor, dass das Mittelteil 3a durch parallele Gestänge bzw. durch ein sog. Parallelogrammgestänge realisiert ist. Hiermit ist möglich, sowohl die Höhe des Mittelteiles 3a und zusätzlich seinen Winkel bezüglich der Trägermaschine 20 verstellen zu können. Die Stelleinrichtung umfasst ferner mehrere Stellglieder, z. B. in Form von Hydraulik- oder Pneumatikzylindern, mittels derer eine Verschwenkstellung der einzelnen Segmente aktiv gesteuert werden kann. Diese sind in der Lage, durch eine Stellbewegung die einzelnen Segmente 3a, 3b, 3c in die gewünschte Position zu bringen. Die gewünschte Position kann für alle Segmente 3a, 3b, 3c derselbe vordefinierte Abstand zur Bodenoberfläche 4a sein, was in den Ansichten der Figur 5 gezeigt ist.

An den äußeren Endbereichen des Mittelteils 3a und an den äußeren Endbereichen der Ausleger 3b, 3c sind jeweils Abstandssensoren 8 angeordnet, die einen Abstand zu einer Bodenoberfläche 4a des Geländes 4 ermitteln. Die Abstandssensoren 8 können beispielsweise als Ultraschallsensoren ausgebildet sein. Die Veränderung des Geländeprofils wird durch die Abstandssensoren 8 festgestellt.

Die landwirtschaftliche Verteilmaschine umfasst eine Regeleinrichtung, die die Verschwenkstellung der Segmente 3a, 3b, 3c des Verteilgestänges 2 so anpasst, dass der Abstand der Segmente zur Bodenoberfläche 4a möglichst gleich bleibt.

Damit der Abstand der Segmente 3a, 3b, 3c zur Bodenoberfläche 4a bei Überfahrt eines Geländes mit veränderlichem Höhenprofil möglichst gleich bleibt, wird der Schwenkvorgang der einzelnen Segmente 3a, 3b, 3c aktiv gesteuert. Die an den einzelnen Segmenten angebrachten Abstandsensoren 8 erfassen bei Betrieb des Verteilgestänges 1 ihren relativen Abstand zur Bodenoberfläche 4a und übertragen den erfassten Istwert an eine Datenverarbeitungsvorrichtung (nicht dargestellt), welche in der Lage ist, die von den Abstandsensoren 8 erfassten Istwerte mit bereits hinterlegten oder durch den Benutzer vorgegebenen Sollwerten zu vergleichen. Nach der Verrechnung durch entsprechende Algorithmen wird aufgrund der hieraus gewonnenen Daten ein Stellsignal an die Stellglieder, z. B. in Form von Hydraulik- oder Pneumatikzylindern, der Segmente 3a, 3b, 3c übermittelt. Diese sind in der Lage, durch eine Stellbewegung die einzelnen Segmente 3a, 3b, 3c in die gewünschte Position zu bringen. Die gewünschte Position kann für alle Segmente 3a, 3b, 3c derselbe vordefinierte Abstand zur Bodenoberfläche 4a sein. Eine mögliche lediglich beispielhafte Ausführungsform des Verteilgestänges 1 mit einer entsprechenden Stelleinrichtung und Regeleinrichtung ist in der Patentschrift EP 2 186 405 B1 beschrieben.

Die Ansicht A der Figur 5 zeigt eine Fahrposition des Verteilgestänges an einer Stelle, an der das Gelände 4 eben ist. Die Segmente 3a, 3b, 3c sind zueinander fluchtend ausgerichtet, so dass alle Segmente 3a, 3b, 3c den gleichen Abstand zur Bodenoberfläche 4a haben. Im Gegensatz hierzu sind die Segmente 3a, 3b, 3c in den Ansichten B bis D relativ zueinander im Hinblick auf das geänderte Höhenprofil der Geländeoberfläche 4a so verschwenkt, dass die Segmente 3a, 3b, 3c näherungsweise den gleichen Abstand zur Geländeoberfläche 4a aufweisen.

Die Ansicht E der Figur 5 zeigt eine weitere Ausführungsform eines Verteilgestänges 12. Gemäß dieser weiteren Ausführungsform ist jeder der seitlichen Ausleger in mindestens zwei Auslegersegmente 3b und 3d bzw. 3c und 3e unterteilt, die über eine horizontale Achse schwenkbar angeordnet sind, wobei die Auslegersegmente 3b und 3d bzw. 3c und 3e untereinander mittels Gelenken verbunden sind und eine Stellbewegung der einzelnen Auslegersegmente zueinander aktiv steuerbar ist. Hierbei kann eine noch bessere Anpassung des Verteilgestänges 12 an die Oberflächenkontur des Geländes 4 erreicht werden.

Nachfolgend wird die Erstellung eines Geländeprofils in Abhängigkeit von Positionen des Verteilgestänges 2, 12 und/oder den Segmenten 3a, 3b, 3c bzw. 3a, 3b, 3c, 3e, 3e des Verteilgestänges 2, 12 beschrieben.

Hierzu werden mittels der Sensoreinrichtung 10 die Relativposition der Segmente 3a, 3b, 3c zueinander erfasst. Die Sensoreinrichtung 10 umfasst hierzu mehrere zwischen den Segmenten 3a, 3b, 3c angeordnete Sensoren 9 (dargestellt in den Ansichten der Figur 5). Ein Sensor 9 ist hierbei zwischen dem Mittelteil 3a und dem Ausleger 3b angeordnet und misst den Verschwenkwinkel a1 zwischen Mittelteil 3a und dem Ausleger 3b. Ein weiterer Sensor 9 ist hierbei zwischen dem Mittelteil 3a und dem Ausleger 3c angeordnet und misst den Verschwenkwinkel a2 zwischen Mittelteil 3a und dem Ausleger 3c. Entsprechend sind bei der Ausführungsvariante gemäß Ansicht E der Figur 5 zwei weitere Sensoren 9 zwischen den beiden Teilsegmenten 3b und 3d bzw. 3c und 3e der Ausleger angeordnet, um deren Verschwenkstellung a3 und a4 relativ zueinander zu erfassen. Die Sensoren 9 können beispielsweise als Winkelsensoren oder Potentiometer ausgeführt sein.

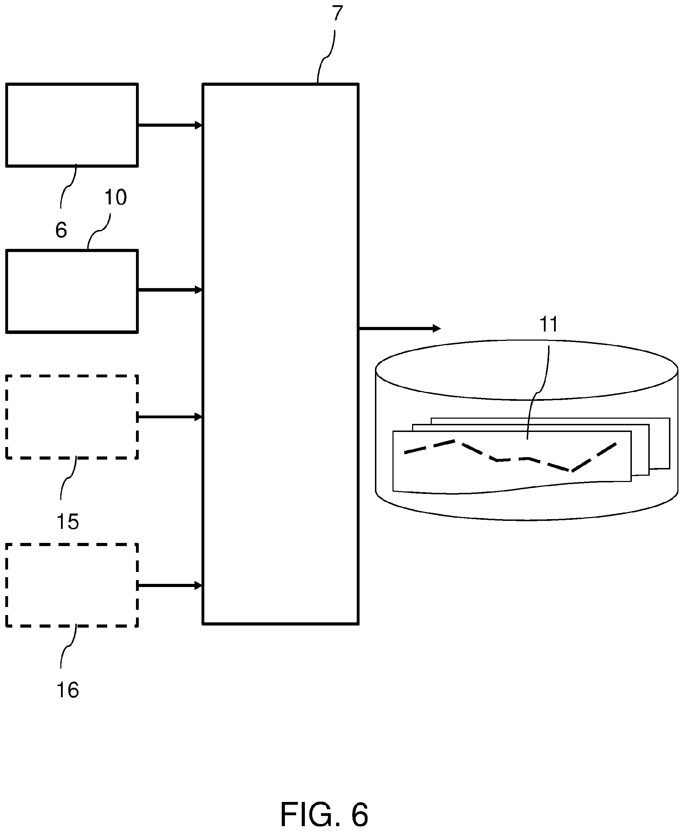

Figur 6 zeigt ein Blockdiagramm zur Illustration der Bestimmung des Geländeprofils gemäß einer Ausführungsform der Erfindung. Nachfolgend wird beispielhaft auf die Ausführungsform der landwirtschaftlichen Verteilmaschine 1 Bezug genommen, die in der Ansicht E der Figur 5 gezeigt ist. Eine Geländeprofilerzeugungseinrichtung 7 empfängt hierzu beim Überfahren eines Geländes fortlaufend Positionsdaten der Landmaschine, die von der Positionsbestimmungseinrichtung 6 erfasst werden. Ferner empfängt die Geländeprofilerzeugungseinrichtung 7 fortlaufend die Relativposition a1 bis a4 der Segmente 3a bis 3e zueinander, die von den Sensoren 9 erfasst werden. Die Relativpositionen der Segmente 3a bis 3e werden beispielsweise als relativer Drehwinkel ermittelt, die zwei benachbarte Segmente zueinander aufweisen.

Die jeweils mittels der Sensoren 9 erfassten Relativpositionen der Segmente 3a - 3e und die mittels der Positionsbestimmungseinrichtung 6 erfassten Ortspositionen der landwirtschaftlichen Verteilmaschine werden jeweils ausgewertet, und auf Basis der Ortspositionen und der jeweiligen Lage der Segmente wird ein Geländeprofil 11 erzeugt und abgespeichert.

Vereinfacht kann auch gesagt werden, dass zu jeder Position der landwirtschaftlichen Maschine auf einer Ackerfläche in Abhängigkeit von den Relativpositionen der Segmente des Verteilgestänges 12 ein Geländequerschnitt erzeugt wird.

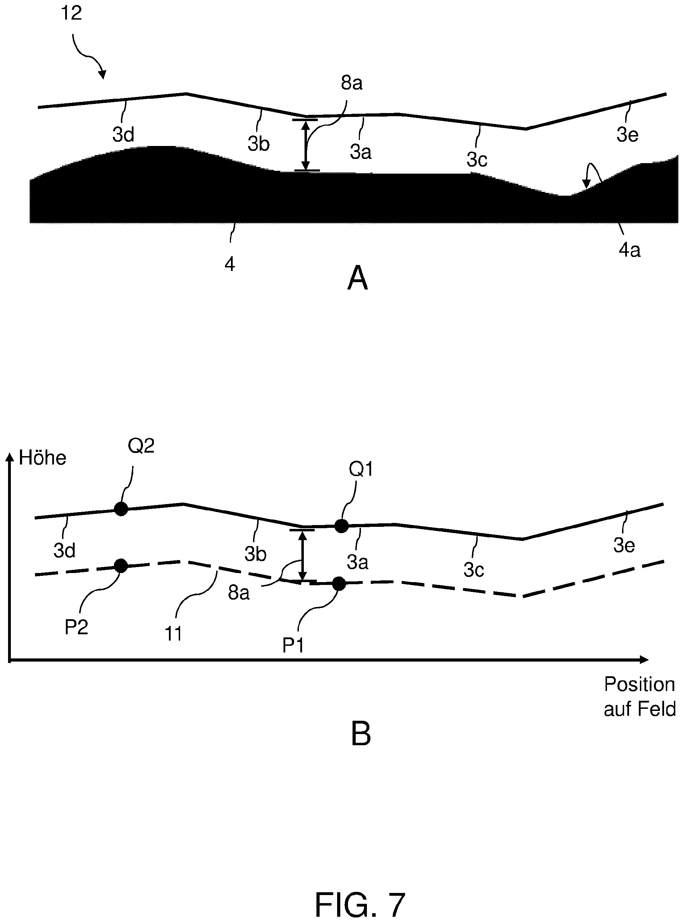

Dies ist in Figur 7 beispielhaft illustriert. Durch die aktive Regelung der Verschwenkstellung der Segmente 3a bis 3e, derart, dass diese im Rahmen der möglichen Gestängekinematik alle möglichst den gleichen Abstand zur einer Geländeoberfläche 4a aufweisen, nähert sich die Relativposition der Segmente 3a bis 3e dem Geländeprofil an, was in Ansicht A der Figur 7 erkennbar ist.

Die Relativpositionen a1 bis a4 der Segmente 3a bis 3e zueinander werden mittels der Sensoren 9 erfasst. Diese Informationen werden von der Geländeprofilerzeugungseinrichtung 7 mit den erfassten Ortspositionen der Verteileinrichtung verknüpft. Auf diese Weise ist die Ortsposition jedes Punkts der Segmente 3a bis 3e eindeutig festgelegt, denn die Relativposition jedes Punkts der Segmente ergibt sich aus der Länge der einzelnen Segmente, dem Abstandsvektor des Aufhängepunkts des Mittelteils a1 vom Empfänger der Positionsbestimmungseinrichtung 6 und aus den mittels der Sensoren 9 erfassten Relativpositionen über entsprechende geometrische Berechnungen.

Entsprechend ist die Geländeprofilerzeugungseinrichtung 7 ausgebildet, zur Erzeugung des Geländeprofils 11 eine Lage und Höhe von mehreren Punkten Q1, Q2 entlang jedes der Segmente zu bestimmen. Die Höhe dieser Punkte wird dann noch um einen Offset 8a korrigiert, der der aktuellen Aufhängehöhe des Gestänges 12 über der Bodenoberfläche 4a entspricht, um auf diese Weise korrespondierende Punkte P1, P2 des Geländeprofils 11 zu bestimmen. Dies ist in Ansicht B der Figur 7 illustriert, wobei vereinfachend nur zwei Punkte Q1, Q2 bzw. P1, P2 dargestellt sind.

Entsprechend kann beim Überfahren eines Geländes fortlaufend für alle Fahrpositionen entsprechend ein Geländeprofil für die aktuelle Fahrposition anhand der aktuellen Ausrichtung der Segmente an dieser Fahrposition bestimmt werden. Zusammengesetzt kann die landwirtschaftliche Verteilmaschine auf diese Weise ein Geländeprofil 11 für das gesamte zu überfahrende Gelände erzeugen, ohne dass eine zusätzliche aufwändige Sensorik, wie beispielsweise eine 3D-Kamera, vonnöten wäre.

Die Genauigkeit kann noch verbessert werden, wenn die Messwerte eines Drehlagesensors 15 verwendet werden, der zwischen Trägerfahrzeug und den Segmenten des Verteilgestänges angeordnet ist und die relative Drehlage von Trägerfahrzeug und dem Mittelteil 3a des Verteilgestänges erfasst. Der Wert des relativen Drehwinkels kann zur Korrektur der Lage und Höhe der Punkte des Verteilgestänges und damit auch zur Korrektur der Punkte des Geländeprofils verwendet werden.

Gemäß einem weiteren Aspekt ist es zudem denkbar, dass das erfindungsgemäß erzeugte Geländeprofil 11 auch Hindernisse, bspw. Bäume, Sträucher, Strommasten oder dergl. mit berücksichtigt. Fährt bspw. eine Feldspritze entlang einer Ackerfläche und trifft auf ein Hindernis, ist in der Regel vorgesehen, dass Segmente des Gestänges um aufrechte Achsen in- oder entgegengesetzt zur Fahrtrichtung verschwenkt werden. Auch ein solches Wegschwenken kann wiederum entsprechend mit berücksichtigt werden, z. B. von dem Spurplanungssystem.

Alternativ oder zusätzlich kann die Geländeprofilerzeugungseinrichtung 7 ausgebildet sein, Werte für mindestens einen Fahrbetriebsparameter 16 der Landmaschine 1 beim Überfahren des Geländes 11 zusammen mit den Positionsdaten, an welchen die jeweiligen Werte auftraten, oder mit dem Geländeprofil 11 zu speichern. Zusätzlich zur jeweiligen Relativposition der Segmente des Gestänges können beispielsweise noch Parameter der Fahreigenschaften der landwirtschaftlichen Maschine entsprechend der Position dokumentiert werden. So kann vorgesehen sein, dass die Fahrgeschwindigkeit an der jeweiligen Position der Ackerfläche dokumentiert wird. Zudem könnte dokumentiert werden, ob die landwirtschaftliche Maschine beschleunigt, verzögert oder mit konstanter Fahrgeschwindigkeit bewegt wird. Darüber hinaus könnte bspw. auch die Leistungsabgabe einer Antriebseinheit einer landwirtschaftlichen Maschine dokumentiert werden. So ist diese beispielsweise während einer Bergauffahrt größer als während einer Bergabfahrt. In Abhängigkeit von derartigen dokumentierten Fahreigenschaften kann somit das jeweilige Flächenprofil noch weiter präzisiert werden.

Die somit erzeugten Geländeprofile können insbesondere zur Spurplanung Verwendung finden und beispielsweise an ein Spurplanungssystem übertragen werden.

Mittels des Spurplanungssystems können anschließend optimierte Fahrwege einer landwirtschaftlichen, insbesondere autonomen oder teilautonomen, Maschine geplant werden. Auch Kurven können entsprechend geplant werden. Insbesondere können jedoch Fahrspuren in Abhängigkeit des Geländeprofils 11 derartig geplant werden, dass die landwirtschaftliche Maschine Hanglagen ausweichen oder in gewünschter Fahrtrichtung und angepasster Geschwindigkeit anfahren kann.

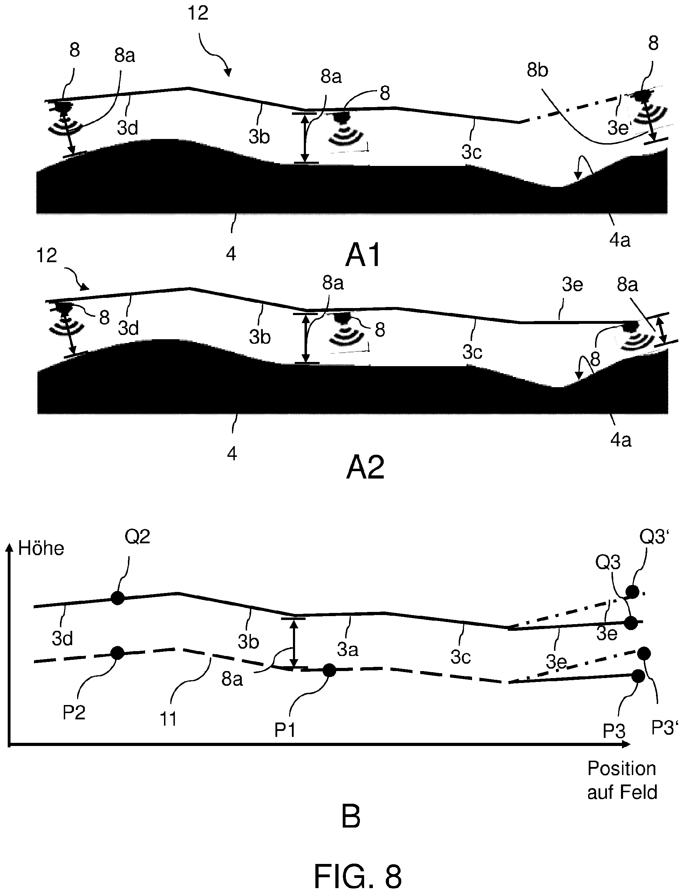

Figur 8 illustriert schematisch die Bestimmung des Geländeprofils gemäß einer weiteren Ausführungsform der Erfindung.

Diese Ausführungsform betrifft eine Landmaschine, bei der die Segmente bzw. das Gestänge einen einstellbaren Soll-Abstand zur Bodenfläche oder zum Bestand haben. Die Landmaschine kann eine Feldspritze und das Gestänge 12 ein Spritzgestänge sein. Zur Überwachung des Soll-Abstands ist mindestens ein Abstandssensor 8 am Gestänge 12 angeordnet, der den Ist-Abstand 8a zur Bodenoberfläche 4a oder zum Bestand erfasst. Lediglich beispielhaft kann ein Soll-Abstand zur Bodenoberfläche oder zum Bestand von 50 cm vorgegeben sein. Die Abstandssensoren können als Ultraschallsensoren ausgeführt sein.

Die mittlere Ansicht der Figur 8, d.h. die Ansicht A2, zeigt nun einen Fall, in dem nicht durch alle Abstandssensoren 8 ein Ist-Abstand 8a erfasst wird, der dem Soll-Abstand entspricht. Der linke und der mittlere Abstandssensor 8 messen jeweils einen Ist-Abstand von ca. 50 cm, was dem Soll-Abstand entspricht. Der rechte Abstandssensor 8, angebracht am Segment 3e misst jedoch nur einen kleineren Ist-Abstand, beispielsweise 40 cm. Gemäß dieser Ausführungsform ist die Geländeprofilerzeugungseinrichtung ausgebildet, einen Abgleich der gemessenen IstWerte der Abstandssensoren 8 mit dem Sollwert vorzunehmen. Weicht der Ist-Abstand vom Sollwert ab, kann daraus geschlossen werden, dass die Relativposition der Segmente zueinander nicht näherungsweise dem Geländeprofil entspricht.

Dies ist in Figur 8 ebenfalls veranschaulicht. Die obere Ansicht der Figur 8, Ansicht A1, zeigt den Fall, in dem das Segment 3e in einer Stellung sein müsste, um den richtigen Soll-Abstand 8b zu messen. Stattdessen ist in Ansicht A2 das Segment zu nah zum Gelände hin verschwenkt. Würde man nun auf Basis der in Ansicht A2 gezeigten erfassten Relativpositionen direkt das Geländeprofil gemäß Ansicht B der Figur 8 bestimmen, würden die Punkte des Geländeprofils P3, die auf Basis von Punkten Q3 des Segments 3e berechnet würden, nicht dem aktuellen Geländeprofil entsprechen.

Entsprechend ist die Geländeprofilerzeugungseinrichtung ausgebildet, die erfassten Abweichungen von Soll- zu Ist-Abstand der Abstandsensoren 8 zu verwenden, um die Lage der Punkte, wie z. B. Q3 und P3 zu korrigieren, z. B. um die Punkte Q3' und P3' zu erhalten. Auf diese Weise kann die Genauigkeit der Erzeugung des Geländeprofils weiter verbessert werden. Mit anderen Worten wird die Differenz zwischen dem Soll- und dem Ist-Abstand der Segmente zur Bodenoberfläche bzw. zum Bestand entsprechend auf die Relativposition der Segmente mit aufgerechnet.

Dies kann natürlich auch umfassen, dass mittels den mehreren Ultraschallsensoren 8 jeweils verschiedene Ist-Abstände ermittelt werden und diese jeweils wieder mit einem Ist-Soll-Abgleich entsprechend bei der Ermittlung der Relativpositionen der Segmente mit berücksichtigt werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Landmaschine, z. B. gezogene Feldspritze
- 2, 12: Arbeitsgerät, z. B. Verteilgestänge, Spritzgestänge
- 3a - 3e: Segment
- 4: Geländeabschnitt
- 4a: Geländeoberfläche
- 5: Fahrspur
- 6: Positionsbestimmungseinrichtung
- 7: Geländeprofilerzeugungseinrichtung
- 8: Abstands-Sensoreinrichtung
- 8a: Offset, Ist-Abstand Verteilgestänge zu Gelände
- 8b: Soll-Abstand Verteilgestänge zu Gelände
- 9: Drehlagensensor
- 10: Sensoreinrichtung
- 11: Geländeprofil
- 13: Spritzdüse
- 14: Hindernis
- 15: Drehlagensensor
- 16: Fahrbetriebsparameter
- 17: Pflanzenbestand
- 20: Trägerfahrzeug
- 100: Landmaschine, z. B. selbstfahrende Feldspritze
- 120: Trägerfahrzeug
- F: Fahrtrichtung

## Patentansprüche

1. Landmaschine (1), vorzugsweise landwirtschaftliche Zug- und/oder Arbeitsmaschine, umfassend
ein Arbeitsgerät (2), aufweisend zueinander verschwenkbare Segmente (3a, 3b, 3c), die in einer senkrecht zur Vorwärtsfahrtrichtung (F) der Landmaschine (1) angeordneten Ebene relativ zueinander verschwenkbar sind;
eine Sensoreinrichtung (10), die ausgebildet ist, eine Relativposition der Segmente (3a, 3b, 3c) zueinander zu erfassen;
eine Positionsbestimmungseinrichtung (6) , vorzugsweise eine satellitengestützte Positionsbestimmungseinrichtung, die ausgebildet ist, Positionsdaten der Landmaschine (1) und/oder des Arbeitsgeräts (2) zu bestimmen, und
eine Geländeprofilerzeugungseinrichtung (7), die ausgebildet ist, in Abhängigkeit von der erfassten Relativposition (a1, a2) der Segmente (3a, 3b, 3c) und den bestimmten Positionsdaten ein Geländeprofil (11), vorzugsweise ein Höhenprofil, zu bestimmen.

2. Landmaschine (1) nach Anspruch 1, wobei die Geländeprofilerzeugungseinrichtung (7) ausgebildet ist, zur Erzeugung des Geländeprofils (11)
a) für mindestens zwei der Segmente (3a, 3b, 3c), vorzugsweise für alle Segmente (3a, 3b, 3c), jeweils eine aktuelle Segmentposition, umfassend eine Lage und Höhe des Segments, anhand der bestimmten Positionsdaten und anhand der erfassten Relativposition der Segmente zu bestimmen, und
b) anhand der aktuellen Segmentposition einen korrespondierenden Punkt des Geländeprofils zu bestimmen.

3. Landmaschine nach Anspruch 2, wobei das Bestimmen der aktuellen Segmentposition das Bestimmen einer Lage und Höhe von mehreren Punkten entlang des Segments umfasst, und wobei die Geländeprofilerzeugungseinrichtung (7) ausgebildet ist, basierend auf den bestimmten Lagen und Höhen der mehreren Punkte korrespondierende Punkte des Geländeprofils zu bestimmen.

4. Landmaschine (1) nach einem der vorhergehenden Ansprüche, wobei die Geländeprofilerzeugungseinrichtung (7) ausgebildet ist, das Geländeprofil (11) für einen von der Landmaschine und/oder dem Arbeitsgerät überfahrenen Geländeabschnitt (4), beispielsweise eine Ackerfläche, zu erzeugen, indem die Relativposition der Segmente und die Positionsdaten für die unterschiedlichen Positionen der Landmaschine (1) und/oder des Arbeitsgeräts (2) beim Überfahren gemäß einer Rasterung und/oder Auflösung ermittelt werden und hieraus das Geländeprofil in korrespondierender Rasterung und/oder Auflösung bestimmt wird.

5. Landmaschine (1) nach Anspruch 4, wobei die Geländeprofilerzeugungseinrichtung (7) ausgebildet ist, bei wiederholtem Überfahren des gleichen Geländeabschnitts (4) ein Geländeprofil dieses Geländeabschnitts zu erzeugen, in welches ein bei einer vorherigen Überfahrt bestimmtes Geländeprofil eingeht.

6. Landmaschine (1) nach Anspruch 4 oder 5, wobei die Geländeprofilerzeugungseinrichtung (7) ausgebildet ist, bei einer Überfahrt eines Geländes entlang verschiedener, vorzugsweise seitlich versetzter, Fahrspuren Geländeprofile für die den Fahrspuren zugeordneten Geländeabschnitte (4) zu bestimmen und aus diesen Geländeprofilen ein Gesamtgeländeprofil zu bestimmen.

7. Landmaschine (1) nach einem der vorhergehenden Ansprüche, wobei die Sensoreinrichtung zwischen den Segmenten angeordnete Sensoren umfasst, wobei die Sensoren vorzugsweise als Winkelsensoren oder Potentiometer ausgeführt sind.

8. Landmaschine (1) nach einem der vorhergehenden Ansprüche, wobei die Landmaschine (1) eine Abstands-Sensoreinrichtung (8) umfasst, die ausgebildet ist, einen Höhenabstand (8a) eines oder mehrerer Segmente zur Geländeoberfläche (4a) und/oder zu einem Pflanzenbestand (12) des Geländes (4) zu bestimmen, wobei die Geländeprofilerzeugungseinrichtung (7) ausgebildet ist, das Geländeprofil (11) in Abhängigkeit von einer durch die Abstands-Sensoreinrichtung (8) ermittelten Höhenführung der Segmente zu bestimmen.

9. Landmaschine (1) nach einem der vorhergehenden Ansprüche, wobei die Geländeprofilerzeugungseinrichtung (7) ausgebildet ist,
a) Hindernisse (14) im Gelände, beispielsweise Bäume, Sträucher und/oder Strommasten, zu erkennen, wobei ein Hindernis vorzugsweise anhand zumindest eines der folgenden Ereignisse erkannt wird: eines für ein Hindernisse charakteristischen Ausweichfahrmanövers der Landmaschine, einer um eine in oder entgegengesetzt zur Vorwärtsfahrtrichtung erfolgenden Schwenkbewegung eines oder mehrerer Segmente um eine aufrechte Achse, einer sensorischen Hinderniserfassung, einer manuellen Hinderniserfassung durch eine Benutzereingabe; und
b) Positionsdaten des erkannten Hindernisses (14) zu bestimmen.

10. Landmaschine (1) nach einem der vorhergehenden Ansprüche, wobei die Landmaschine ein Trägerfahrzeug (20) umfasst, an welchem das Arbeitsgerät (2) angeordnet ist, wobei
a) zwischen Trägerfahrzeug (20) und den Segmenten (3a, 3b, 3c) des Arbeitsgeräts (2) ein Sensor (15) angeordnet ist zur Erfassung einer relativen Drehlage von Trägerfahrzeug (20) und Arbeitsgerät (2) und/oder von Trägerfahrzeug (20) und einem Mittelteil (3a) der Segmente (2a, 3b, 3c), wobei die Geländeprofilerzeugungseinrichtung (7) ausgebildet ist, in Abhängigkeit von der erfassten relative Drehlage eine Relativposition der Segmente zu korrigieren; und/oder
b) an dem Trägerfahrzeug (20) der Landmaschine (1) ein Neigungssensor zur Erfassung einer Neigung des Trägerfahrzeugs angeordnet ist.

11. Landmaschine nach einem der vorhergehenden Ansprüche, wobei die Geländeprofilerzeugungseinrichtung ausgebildet ist, Werte für mindestens einen Fahrbetriebsparameter (16) der Landmaschine (1) beim Überfahren des Geländes (11) zusammen mit den Positionsdaten, an welchen die jeweiligen Werte auftraten, oder mit dem Geländeprofil (11) zu speichern.

12. Landmaschine nach Anspruch 11, wobei die Werte für den mindestens einen Fahrbetriebsparameter (16)
a) eine Fahrgeschwindigkeit, eine Fahrbeschleunigung und/oder eine Leistungsangabe einer Antriebseinheit der Landmaschine angeben und/oder
b) angeben, ob die Landmaschine an einer Fahrposition beschleunigt, verzögert oder mit konstanter Fahrgeschwindigkeit bewegt wird.

13. Landmaschine nach einem der vorhergehenden Ansprüche, wobei die Landmaschine
a) eine Feldspritze (1) und/oder ein Düngerstreuer ist und die zueinander verschwenkbaren Segmente Teile eines Verteilgestänges (2) zum Ausbringen von flüssigen und/oder festen Wirkstoffen sind; oder
b) eine Bodenbearbeitungs- und/oder Saatmaschine ist und die zueinander verschwenkbaren Segmente Werkzeuge zur Bodenbearbeitung und/oder zur Aussaat tragen.

14. Verfahren zur Erzeugung eines Geländeprofils mit einer Landmaschine nach einem der vorhergehenden Ansprüche, umfassend:
Erzeugen eines Geländeprofils in Abhängigkeit von der erfassten Relativposition der Segmente und den bestimmten Positionsdaten.

15. Verfahren nach Verfahren Anspruch 14,
a) wobei das Gelände mittels mindestens zweier verschiedener Landmaschinen abgefahren wird, die unterschiedliche Arbeitsbreiten aufweisen, derart, dass ein erstes Geländeprofil mit einer ersten Landmaschine und mindestens ein zweites Geländeprofil mit mindestens einer zweiten Landmaschine erzeugt wird und die erzeugten Geländeprofile fusioniert werden; und/oder
b) wobei das Gelände zur Erzeugung des Geländeprofils mittels der Landmaschine in verschiedenen Richtungen abgefahren wird, vorzugsweise einmal in einer Längsrichtung und einmal in einer Querrichtung des Geländes.

## Claims

1. Agricultural machine (1), preferably an agricultural tractor and/or working machine, comprising
an implement (2) comprising segments (3a, 3b, 3c) pivotable relative to one another in a plane arranged perpendicular to the forward travel direction (F) of the agricultural machine (1);
a sensor device (10) configured to detect a relative position of the segments (3a, 3b, 3c) with respect to each other;
a position determining device (6), preferably a satellite-based position determining device, which is configured to determine position data of the agricultural machine (1) and/or the implement (2), and
a terrain profile generating device (7), which is configured to determine a terrain profile (11), preferably an elevation profile, as a function of the detected relative position (a1, a2) of the segments (3a, 3b, 3c) and the determined position data.

2. Agricultural machine (1) according to claim 1, wherein the terrain profile generating device (7), for the purpose of generating the terrain profile (11), is configured,
a) for at least two of the segments (3a, 3b, 3c), preferably for all segments (3a, 3b, 3c), to determine a current segment position respectively, comprising a position and height of the segment, on the basis of the determined position data and on the basis of the detected relative position of the segments, and
b) to determine a corresponding point of the terrain profile on the basis of the current segment position.

3. Agricultural machine according to claim 2, wherein the determining of the current segment position comprises determining a position and height of a plurality of points along the segment, and wherein the terrain profile generating device (7) is configured to determine corresponding points of the terrain profile based on the determined positions and heights of the plurality of points.

4. Agricultural machine (1) according to one of the preceding claims, wherein the terrain profile generating device (7) is configured to generate the terrain profile (11) for a section of terrain (4), for example an area of arable land, which is traversed by the agricultural machine and/or the implement, in that the relative position of the segments and the position data for the different positions of the agricultural machine (1) and/or the implement (2) when traversing are determined in accordance with a grid and/or a resolution and the terrain profile is determined therefrom in corresponding grid and/or resolution.

5. Agricultural machine (1) according to claim 4, wherein the terrain profile generating device (7) is configured, during repeated traversing of the same terrain section (4), to generate a terrain profile of this terrain section, in which a terrain profile determined during a previous traversing is incorporated.

6. Agricultural machine (1) according to claim 4 or 5, wherein the terrain profile generating device (7) is configured, during a traverse of a terrain along various, preferably laterally offset, tracks, to determine terrain profiles for the terrain sections (4) assigned to the tracks and to determine an overall terrain profile from these terrain profiles.

7. Agricultural machine (1) according to one of the preceding claims, wherein the sensor device comprises sensors arranged between the segments, wherein the sensors are preferably configured as angle sensors or potentiometers.

8. Agricultural machine (1) according to one of the preceding claims, wherein the agricultural machine (1) comprises a distance sensor device (8) which is configured to determine a height distance (8a) of one or more segments to the terrain surface (4a) and/or towards a crop (12) of the terrain (4), wherein the terrain profile generating device (7) is configured to determine the terrain profile (11) as a function of a height guiding of the segments determined by the distance sensor device (8).

9. Agricultural machine (1) according to one of the preceding claims, wherein the terrain profile generating device (7) is configured,
a) to detect obstacles (14) in the terrain, for example trees, bushes and/or electricity pylons, wherein an obstacle preferably being detected on the basis of at least one of the following events: an evasive driving maneuver of the agricultural machine that is characteristic for an obstacle, a pivoting movement of one or more segments about an upright axis taking place in or opposite to the forward driving direction, a sensory obstacle detection, a manual obstacle detection by a user input; and
b) to determine position data of the detected obstacle (14).

10. Agricultural machine (1) according to any one of the preceding claims, wherein the agricultural machine comprises a carrier vehicle (20) on which the implement (2) is arranged, wherein
a) a sensor (15) is arranged between the carrier vehicle (20) and the segments (3a, 3b, 3c) of the implement (2) for detecting a relative rotational position of the carrier vehicle (20) and implement (2) and/or of the carrier vehicle (20) and a center part (3a) of the segments (2a, 3b, 3c), the terrain profile generating device (7) being configured to correct a relative position of the segments as a function of the detected relative rotational position of the segments; and/or
b) an inclination sensor for detecting an inclination of the carrier vehicle is arranged on the carrier vehicle (20) of the agricultural machine (1).

11. Agricultural machine according to one of the preceding claims, wherein the terrain profile generating device is configured to store values for at least one driving operation parameter (16) of the agricultural machine (1) when driving over the terrain (11) together with position data at which the respective values occurred or together with the terrain profile (11).

12. Agricultural machine according to claim 11, wherein the values for the at least one driving parameter (16)
a) indicate a travel speed, a travel acceleration and/or a power output of a drive unit of the agricultural machine, and/or
b) indicate whether the agricultural machine is accelerated, decelerated or moved at a constant travel speed at a travel position.

13. Agricultural machine according to any one of the preceding claims, wherein the agricultural machine
a) is a field sprayer (1) and/or a fertilizer spreader and wherein the segments which can be pivoted relative to one another are parts of a distribution boom (2) for applying liquid and/or solid active substances; or
b) is a soil cultivating and/or sowing machine and the segments which can be swivelled towards each other carry tools for soil cultivation and/or for sowing.

14. Method for generating a terrain profile with an agricultural machine according to one of the preceding claims, comprising:
generating a terrain profile in dependence on the detected relative position of the segments and the determined position data.

15. Method according to method claim 14,
a) wherein the terrain is traversed by at least two different agricultural machines having different working widths, such that a first terrain profile is generated with a first agricultural machine and at least a second terrain profile is generated with at least a second agricultural machine, and the generated terrain profiles are merged; and/or
b) wherein for generating the terrain profile , the terrain is driven over by the agricultural machine in different directions, preferably once in a longitudinal direction and once in a transverse direction of the terrain.

## Revendications

1. Machine agricole (1), de préférence machine de traction et/ou de travail agricole, comprenant
un appareil de travail (2) présentant des segments (3a, 3b, 3c) pivotants les uns par rapport aux autres qui sont pivotants dans un plan agencé perpendiculairement au sens de l'avance (F) de la machine agricole (1) les uns par rapport aux autres ;
un dispositif capteur (10) qui est réalisé afin de détecter une position relative des segments (3a, 3b, 3c) les uns par rapport aux autres ;
un dispositif de détermination de position (6), de préférence un dispositif de détermination de position par satellite qui est réalisé afin de déterminer des données de position de la machine agricole (1) et/ou de l'appareil de travail (2), et
un dispositif de génération de profil de terrain (7) qui est réalisé afin de déterminer, en fonction de la position relative détectée (a1, a2) des segments (3a, 3b, 3c) et des données de position déterminées, un profil de terrain (11), de préférence un profil vertical.

2. Machine agricole (1) selon la revendication 1, dans laquelle le dispositif de génération de profil de terrain (7) est réalisé pour la génération du profil de terrain (11),
a) afin de déterminer pour au moins deux des segments (3a, 3b, 3c) de préférence pour tous les segments (3a, 3b, 3c), respectivement une position de segment actuelle comprenant une position et une hauteur du segment, à l'aide des données de position déterminées et à l'aide de la position relative détectée des segments, et
b) de déterminer à l'aide de la position de segment actuelle un point correspondant du profil de terrain.

3. Machine agricole selon la revendication 2, dans laquelle la détermination de la position de segment actuelle comporte la détermination d'une position et d'une hauteur de plusieurs points le long du segment, et dans laquelle le dispositif de génération de profil de terrain (7) est réalisé afin de déterminer, sur la base des positions et hauteurs déterminées des plusieurs points, des points correspondants du profil de terrain.

4. Machine agricole (1) selon l'une quelconque des revendications précédentes, dans laquelle le dispositif de génération de profil de terrain (7) est réalisé afin de générer le profil de terrain (11) pour une section de terrain (4) franchie par la machine agricole et/ou l'appareil de travail, par exemple une surface arable en ce que la position relative des segments et les données de position pour les différentes positions de la machine agricole (1) et/ou de l'appareil de travail (2) sont déterminées lors du franchissement selon un tramage et/ou une résolution et à partir de là le profil de terrain est déterminé dans le tramage et/ou la résolution correspondante.

5. Machine agricole (1) selon la revendication 4, dans laquelle le dispositif de génération de profil de terrain (7) est réalisé afin de générer en cas de franchissement répété de la même section de terrain (4) un profil de terrain de cette section de terrain, dans lequel un profil de terrain déterminé en cas de franchissement précédent intervient.

6. Machine agricole (1) selon la revendication 4 ou 5, dans laquelle le dispositif de génération de profil de terrain (7) est réalisé afin de déterminer en cas de franchissement d'un terrain le long de différentes voies de circulation, de préférence décalées latéralement, des profils de terrain pour les sections de terrain (4) associées aux voies de circulation et de déterminer à partir de ces profils de terrain un profil de terrain entier.

7. Machine agricole (1) selon l'une quelconque des revendications précédentes, dans laquelle le dispositif capteur comporte des capteurs agencés entre les segments, dans laquelle les capteurs sont de préférence réalisés comme capteurs angulaires ou potentiomètres.

8. Machine agricole (1) selon l'une quelconque des revendications précédentes, dans laquelle la machine agricole (1) comporte un dispositif capteur de distance (8) qui est réalisé afin de déterminer une distance verticale (8a) d'un ou plusieurs segments par rapport à la surface de terrain (4a) et/ou à une végétation (12) du terrain (4), dans laquelle le dispositif de génération de profil de terrain (7) est réalisé afin de déterminer le profil de terrain (11) en fonction d'un guidage vertical des segments déterminé par le dispositif capteur de distance (8).

9. Machine agricole (1) selon l'une quelconque des revendications précédentes, dans laquelle le dispositif de génération de profil de terrain (7) est réalisé
a) afin de reconnaître des obstacles (14) dans le terrain, par exemple des arbres, des arbustes et/ou des poteaux électriques, dans laquelle un obstacle est de préférence reconnu à l'aide d'au moins un des événements suivants : une manoeuvre de déplacement d'évitement caractéristique d'un obstacle de la machine agricole, un mouvement de pivotement s'effectuant autour d'un dans ou à l'opposé du sens d'avance d'un ou de plusieurs segments autour d'un axe vertical, d'une détection d'obstacle par capteur, d'une détection d'obstacle manuelle par une saisie utilisateur ; et
b) afin de déterminer des données de position de l'obstacle (14) reconnu.

10. Machine agricole (1) selon l'une quelconque des revendications précédentes, dans laquelle la machine agricole comporte un véhicule porteur (20), au niveau duquel est agencé l'appareil de travail (2), dans laquelle
a) un capteur (15) est agencé entre le véhicule porteur (20) et les segments (3a, 3b, 3c) de l'appareil de travail (2) pour la détection d'une position rotative relative du véhicule porteur (20) et de l'appareil de travail (2) et/ou du véhicule porteur (20) et d'une partie médiane (3a) des segments (2a, 3b, 3c), dans laquelle le dispositif de génération de profil de terrain (7) est réalisé afin de corriger une position relative des segments en fonction de la position rotative relative détectée ; et/ou
b) un capteur d'inclinaison est agencé au niveau du véhicule porteur (20) de la machine agricole (1) pour la détection d'une inclinaison du véhicule porteur.

11. Machine agricole selon l'une quelconque des revendications précédentes, dans laquelle le dispositif de génération de profil de terrain est réalisé afin d'enregistrer des valeurs pour au moins un paramètre de fonctionnement de roulement (16) de la machine agricole (1) lors du franchissement du terrain (11) conjointement avec les données de position, auxquelles les valeurs respectives sont survenues, ou avec le profil de terrain (11).

12. Machine agricole selon la revendication 11, dans laquelle les valeurs pour l'au moins un paramètre de fonctionnement de roulement (16)
a) indiquent une vitesse de roulement, une accélération de roulement et/ou une indication de puissance d'une unité d'entraînement de la machine agricole et/ou
b) indiquent si la machine agricole dans une position de roulement, accélère, ralentit ou est déplacée à une vitesse de roulement constante.

13. Machine agricole selon l'une quelconque des revendications précédentes, dans laquelle la machine agricole
a) est un pulvérisateur agricole (1) et/ou un distributeur d'engrais et les segments pivotants les uns par rapport aux autres sont des pièces d'une tige de distribution (2) pour l'épandage de substances actives liquides et/ou solides ; ou
b) est une machine de traitement du sol et/ou un semoir et les segments pivotants les uns par rapport aux autres portent des outils pour le traitement du sol et/ou pour le semis.

14. Procédé de génération d'un profil de terrain avec une machine agricole selon l'une quelconque des revendications précédentes, comprenant :
la génération d'un profil de terrain en fonction de la position relative détectée des segments et des données de position déterminées.

15. Procédé selon la revendication de procédé 14,
a) dans lequel le terrain est parcouru au moyen d'au moins deux machines agricoles différentes qui présentent différentes largeurs de travail de telle manière qu'un premier profil de terrain soit généré avec une première machine agricole et au moins un second profil de terrain avec au moins une seconde machine agricole et les profils de terrain générés sont fusionnés ; et/ou
b) dans lequel le terrain est parcouru pour la génération du profil de terrain au moyen de la machine agricole dans différents sens, de préférence une fois dans un sens longitudinal et une fois dans un sens transversal du terrain.
